# EUROPEAN PATENT APPLICATION

(11) **EP 4 224 063 A1**
(43) Date of publication of application: **09.08.2023**
(21) Application number: 23150235.2
(22) Date of filing: 04.01.2023
(51) Int. Cl.: F23R 3/20, F02K 3/10

(54) **REHEAT ASSEMBLY FOR GAS TURBINE ENGINE**

(30) Priority: 04.02.2022 GB 202201429
(71) Applicant: Rolls-Royce plc, London N1 9FX (GB)
(72) Inventor: Powell, Ashley, Derby, DE24 8BJ (GB); Wilkinson, Andrew, Derby, DE24 8BJ (GB); Romero, Eduardo, Derby, DE24 8BJ (GB)
(74) Representative: Rolls-Royce plc

(57) **Abstract**

Reheat assembly (300) for a gas turbine engine, the reheat assembly comprising: a jetpipe casing (310) comprising a reheat core section (320) configured to convey a core flow of air from a reheat core inlet to a reheat core outlet, a reheat bypass section (330) configured to convey a bypass flow of air from a reheat bypass inlet to a reheat bypass outlet radially outward of the core section, wherein the reheat core section and the reheat bypass section are radially separated at the reheat core inlet and the reheat bypass inlet by a support duct (340) within the jetpipe casing, a reheat arrangement comprising a radially extending flameholder (370) and a core fuel injection port (362,366), wherein the flameholder is mounted to the jetpipe casing and extends through the reheat bypass section and at least partly into the reheat core section, the flameholder being configured to promote a formation of a wake-stabilised region (380) within the core flow of air and the bypass flow of air downstream of the flameholder, and the core fuel injection port being circumferentially aligned with the flameholder upstream of the wake-stabilised region and configured to discharge a flow of fuel into the reheat core section for mixing with the core flow of air.

## Description

### TECHNICAL FIELD

The present disclosure relates to a reheat assembly for a gas turbine engine. The present disclosure further relates to a gas turbine engine comprising a reheat assembly and also to an aircraft including the gas turbine engine.

### BACKGROUND

Conventionally, a reheat assembly may be provided to a gas turbine engine for the purpose of providing increased thrust. A reheat assembly increases thrust by injecting fuel into a flow of air which has been exhausted from a core of the gas turbine engine. The fuel is dispersed within the flow of air and mixes with the flow of air to form a fuel-air mixture within the flow of air prior to being entrained into a wake of a flameholder. Within the wake of the flameholder, the fuel-air mixture is combusted in a flame. The heat released by the flame reheats the flow of air from the core of the gas turbine engine and provides the required additional thrust.

### SUMMARY

According to a first aspect of the present disclosure, there is provided a reheat assembly for a gas turbine engine, the reheat assembly comprising: a jetpipe casing comprising: a reheat core section configured to convey a core flow of air from a reheat core inlet to a reheat core outlet; and a reheat bypass section configured to convey a bypass flow of air from a reheat bypass inlet to a reheat bypass outlet radially outward of the reheat core section, wherein the reheat core section and the reheat bypass section are radially separated at the reheat core inlet and the reheat bypass inlet by a support duct within the jetpipe casing; a reheat arrangement comprising a radially extending flameholder and a plurality of fuel injection ports which includes a plurality of core fuel injection ports, and wherein: the flameholder is configured to promote a formation of a core flow wake-stabilised region within the core flow of air downstream of the flameholder; and each of the plurality of core fuel injection ports are: circumferentially aligned with the flameholder upstream of the core flow wake-stabilised region, configured to discharge a respective flow of fuel into the reheat core section for mixing with the core flow of air, and offset with respect to one another along a radial direction of the jetpipe casing.

The flameholder may be mounted to the jetpipe casing and may extend through the reheat bypass section to promote a formation of a bypass flow wake-stabilised region within the bypass flow of air downstream of the flameholder.

The flameholder may be removably mounted to the jetpipe casing.

The plurality of fuel injection ports may be integrated with the flameholder.

The plurality of fuel injection ports may be disposed along a leading edge of the flameholder.

The reheat arrangement may further comprise a fuel supply system configured to supply the respective flow of fuel to each of the plurality of fuel injection ports. The fuel supply system may be further configured to independently control a mass flow rate of the respective flow of fuel supplied to each of the plurality of fuel injection ports.

It may be that the fuel supply system is at least partially disposed within the flameholder.

It may be that the plurality of fuel injection ports further comprises a bypass fuel injection port circumferentially aligned with the flameholder upstream of the bypass flow wake-stabilised region and configured to discharge a flow of fuel into the reheat bypass section for mixing with the bypass flow of air.

It may be that the bypass fuel injection port is one of a plurality of bypass fuel injection ports, and wherein each of the plurality of bypass fuel injection ports are: circumferentially aligned with the flameholder upstream of the bypass flow wake-stabilised region, and configured to discharge a respective flow of fuel into the reheat bypass section for mixing with the bypass flow of air; and offset with respect to each other along a radial direction of the jetpipe casing.

It may be that each of the plurality of fuel injection ports is configured to discharge the respective flow of fuel in a direction having a component perpendicular to an axial direction of the jetpipe.

Each of the plurality of fuel injection ports may be configured to discharge the respective flow of fuel in a direction perpendicular to the axial direction.

It may be that the reheat assembly further comprises a screech damper annulus defined between a screech damper duct and the jetpipe casing. It may be that the screech damper annulus comprises a screech damper inlet disposed radially outward of the radially outermost fuel injection port. It may be that the flameholder comprises a cooling air inlet within the screech damper annulus to receive a cooling flow of air from the screech damper annulus and a cooling air pathway configured to convey the cooling flow of air from the cooling air inlet through the flameholder for heat exchange therebetween.

It may be that the screech damper inlet is axially aligned with or upstream of the plurality of fuel injection ports.

It may be that the flameholder is disposed downstream of the support duct.

It may be that the reheat assembly comprises a plurality of reheat arrangements. It may be that the plurality of reheat arrangements are offset with respect to one another around a circumferential direction of the reheat assembly.

The reheat assembly may further comprise a hot shot injector configured to inject a shot of fuel from a combustor into the wake-stabilised region to auto-ignite to produce a stable flame.

According to a second aspect of the present disclosure, there is provided a gas turbine engine comprising: an engine core; an inner casing which defines a core duct; an outer casing which defines a bypass duct; and a reheat assembly in accordance with the first aspect, wherein the jetpipe casing is attached to the outer casing and the support duct is radially aligned with the inner casing such that: the reheat core inlet is aligned with an outlet of the core duct; and the reheat bypass inlet is aligned with an outlet of the bypass duct; and wherein; the core duct is configured to convey the core flow of air through the engine core to the reheat core inlet; and the bypass duct is configured to convey the bypass flow of air through the gas turbine engine without passing through the engine core to the reheat bypass inlet.

According to a third aspect of the present disclosure, there is provided an aircraft comprising an airframe and a gas turbine engine in accordance with the second aspect.

According to a fourth aspect of the present disclosure, there is provided a reheat assembly for a gas turbine engine, the reheat assembly comprising: a jetpipe casing comprising: a reheat core section configured to convey a core flow of air from a reheat core inlet to a reheat core outlet; and a reheat bypass section configured to convey a bypass flow of air from a reheat bypass inlet to a reheat bypass outlet radially outward of the core section, wherein the reheat core section and the reheat bypass section are radially separated at the reheat core inlet and the reheat bypass inlet by a support duct within the jetpipe casing; a reheat arrangement comprising a radially extending flameholder and a core fuel injection port, wherein: the flameholder is mounted to the jetpipe casing and extends through the reheat bypass section and at least partly into the reheat core section; the flameholder is configured to promote a formation of a wake-stabilised region within the core flow of air and the bypass flow of air downstream of the flameholder; and the core fuel injection port is: circumferentially aligned with the flameholder upstream of the wake-stabilised region, and configured to discharge a flow of fuel into the reheat core section for mixing with the core flow of air.

It may be that the flameholder is removably mounted to the jetpipe casing. It may be that the core fuel injection port is integrated with the flameholder. It may be that the core fuel injection port is disposed along a leading edge of the flameholder.

It may be that the reheat arrangement comprises a plurality of fuel injection ports. It may be that the plurality of fuel injection ports comprises at least one core fuel injection port and optionally at least one bypass fuel injection port, wherein the at least one bypass fuel injection port is configured to discharge a respective flow of fuel into the reheat bypass section for mixing with the bypass flow of air; and wherein each of the plurality of fuel injection ports are circumferentially aligned with the flameholder upstream of the wake-stabilised region and offset with respect to one another along a radial direction of the jetpipe casing.

In other words, the plurality of core fuel injection ports may include: one core fuel injection port and one bypass fuel injection port; or multiple core fuel injection ports and one bypass fuel injection ports; or one core fuel injection port and multiple bypass fuel injection ports; or multiple core fuel injection ports and multiple bypass fuel injection ports.

It may be that the reheat assembly further comprises a fuel supply system configured to supply the respective flow of fuel to each of the plurality of fuel injection ports. It may be that the fuel supply system is further configured to independently control a mass flow rate of the respective flow of fuel supplied to each of the plurality of fuel injection ports.

It may be that the fuel supply system is at least partially disposed within the flameholder.

It may be that each of the plurality of fuel injection ports is configured to discharge the respective flow of fuel in a direction having a component perpendicular to an axial direction of the jetpipe casing.

It may be that the reheat assembly further comprises a screech damper annulus defined between a screech damper duct and the jetpipe casing. It may be that the screech damper annulus comprises an inlet axially aligned with or upstream of the fuel injection port or the plurality of fuel injection ports. It may be that the flameholder comprises a cooling air inlet within the screech damper annulus to receive a cooling flow of air from the screech damper annulus and a cooling air pathway configured to convey the cooling flow of air from the cooling air inlet through the flameholder for heat exchange therebetween.

It may be that the screech damper duct is disposed within the reheat bypass section such that the screech damper annulus is configured to receive the portion of the bypass flow of air upstream and radially outward of the radially outermost fuel injection port.

It may be that the flameholder is disposed downstream of the support duct.

It may be that the reheat assembly comprises a plurality of reheat arrangements offset with respect to one another around a circumferential direction of the jetpipe casing.

The reheat assembly may further comprise a hot shot injector configured to inject fuel from a combustor into respective wake-stabilised region to auto-ignite and produce a stable flame.

According to a fifth aspect of the present disclosure, there is provided a gas turbine engine comprising: an engine core; an inner casing which defines a core duct; an outer casing which defines a bypass duct; and a reheat assembly according to the fourth aspect, wherein the jetpipe casing is attached to the outer casing and the support duct is radially aligned with the inner casing such that: the reheat core inlet is aligned with an outlet of the core duct, and the reheat bypass inlet is aligned with an outlet of the bypass duct; and wherein the core duct is configured to convey the core flow of air through the engine core to the reheat core inlet; and the bypass duct is configured to convey the bypass flow of air through the gas turbine engine without passing through the engine core to the reheat bypass inlet.

According to a sixth aspect of the present disclosure, there is provided an aircraft comprising a gas turbine engine in accordance with the fifth aspect.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a sectional side view of a gas turbine engine;
**Figure 2** is a top view of an aircraft comprising an airframe and the gas turbine engine;
**Figure 3A** is a sectional side view of a first example reheat assembly;
**Figure 3B** is a sectional side view of a second example reheat assembly; and
**Figure 4** is a rear view of the first example reheat assembly.

### DETAILED DESCRIPTION

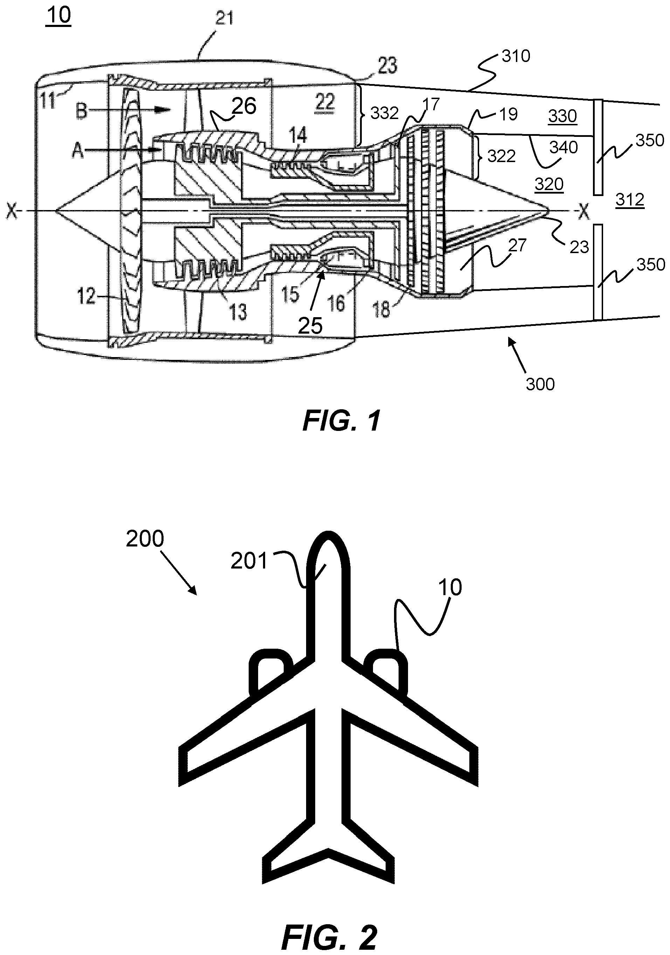

**Figure 1** shows a ducted fan gas turbine engine 10 having a principal and rotational axis X-X. The engine 10 generally comprises an air intake 11, a propulsive fan 12, and an engine core 25. The engine core 25 comprises, in axial flow series, an intermediate pressure compressor 13, a high-pressure compressor 14, combustion equipment 15, a high-pressure turbine 16, an intermediate pressure turbine 17, and a low-pressure turbine 18. An outer casing 21 generally surrounds the engine 10 and defines the intake 11, a bypass duct 22 and a bypass duct outlet 23. An inner casing 26 defines a core duct 27, in which the engine core 25 is disposed, and further defines a core duct outlet 19.

During operation, air entering the intake 11 is accelerated by the fan 12 to produce two air flows: a core flow of air A into the engine core 25 and a bypass flow of air B which passes through the bypass duct 22 to provide propulsive thrust. The intermediate pressure compressor 13 compresses the core flow of air A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the core duct outlet 19 to provide additional propulsive thrust. The resultant hot combustion products are exhausted through the core duct outlet 19. The high, intermediate and low-pressure turbines respectively drive the high and intermediate pressure compressors 14, 13 and the fan 12 by suitable interconnecting shafts.

The gas turbine engine 10 further comprises a reheat assembly 300. The reheat assembly 300 is generally configured to inject fuel into the core flow of air A downstream of the low-pressure turbine 18 and optionally to inject fuel into the bypass flow of air B for the purpose of combustion therein, causing the core flow of air A or the bypass flow of air B to be reheated, thereby providing additional propulsive thrust.

The reheat assembly 300 generally comprises a jetpipe casing 310 and a support duct 340. The support duct 340 extends axially from an upstream end of the jetpipe casing 310 (i.e., an end closest to the air intake 11), at least partially through the jetpipe casing 310 in a direction towards a downstream end of the jetpipe casing 310 (i.e., an end furthest from the air intake 11). The jetpipe casing 310 defines a reheat core section 320 configured to duct the core flow of air A from a reheat core inlet 322 to a reheat core outlet 324, and a reheat bypass section 330 configured to duct the bypass flow of air B from a reheat bypass inlet 332 to a reheat bypass outlet 334. The reheat bypass section 330 is annular and disposed radially outwardly from the reheat core section 320 such that the reheat bypass inlet 332 is disposed radially outward of the reheat core inlet 322, while the reheat bypass outlet 334 is also disposed radially outward of the reheat core outlet 324. The support duct 340 at least partially separates the reheat bypass section 330 from the reheat core section 320 at the upstream end of the jetpipe casing 310.

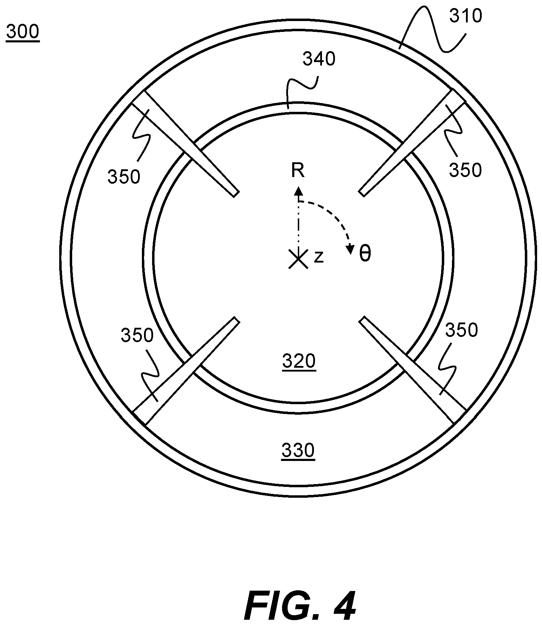

In this example, the gas turbine engine 10 comprises a plurality of reheat arrangements 350. Each reheat arrangement 350 is configured to enable the ignition of, and promote the stable formation of, a flame within the reheat assembly 300. In this example, the plurality of reheat arrangements 350 are circumferentially distributed around the jetpipe casing 310, as shown in **Figure 4** which shows a rear view of the reheat assembly 300. In other words, the plurality of reheat arrangements 350 are offset with respect to one another around a circumferential direction θ of the reheat assembly 300.

The plurality of reheat arrangements 350 are independently mounted to the jetpipe casing 310 so that they can be removed and replaced easily without requiring unnecessary removal and replacement of any other components. Although Figure 4 shows a total of four reheat arrangements 350 offset with respect to one another around the circumferential direction θ of the reheat assembly 300, it will be appreciated that there may be any suitable number of reheat arrangements, which may be offset with respect to one another around the circumferential direction θ of the reheat assembly 300 in this way. In other examples, there may be only a single reheat arrangement 350.

The jetpipe casing 310 defines an afterburning region 312 in the downstream end of the jetpipe casing 310 (downstream of the reheat arrangements 350) in which a core flow of air A and a bypass flow of air B from the reheat core section 320 and the reheat bypass section 330 respectively are able to mix, and in which fuel injected into the air streams is ignited to provide additional thrust.

The jetpipe casing 310 of the reheat assembly 300 is radially aligned with, and attached to the outer casing 21 such that the reheat bypass inlet 332 of the reheat assembly 300 is aligned with the bypass duct outlet 23. The support duct 340 of the reheat assembly 300 is radially aligned with, and attached to the inner casing 26 such that the reheat core inlet 322 of the reheat assembly 300 is aligned with the core duct outlet 19.

Accordingly, the core duct 27 of the gas turbine engine 10 is configured to convey the core flow of air A through the engine core 25 to the reheat core inlet 322 and the bypass duct 22 of the gas turbine engine 10 is configured to convey the bypass flow of air B through the gas turbine engine 10 to the reheat bypass inlet 332, without passing through the engine core 25.

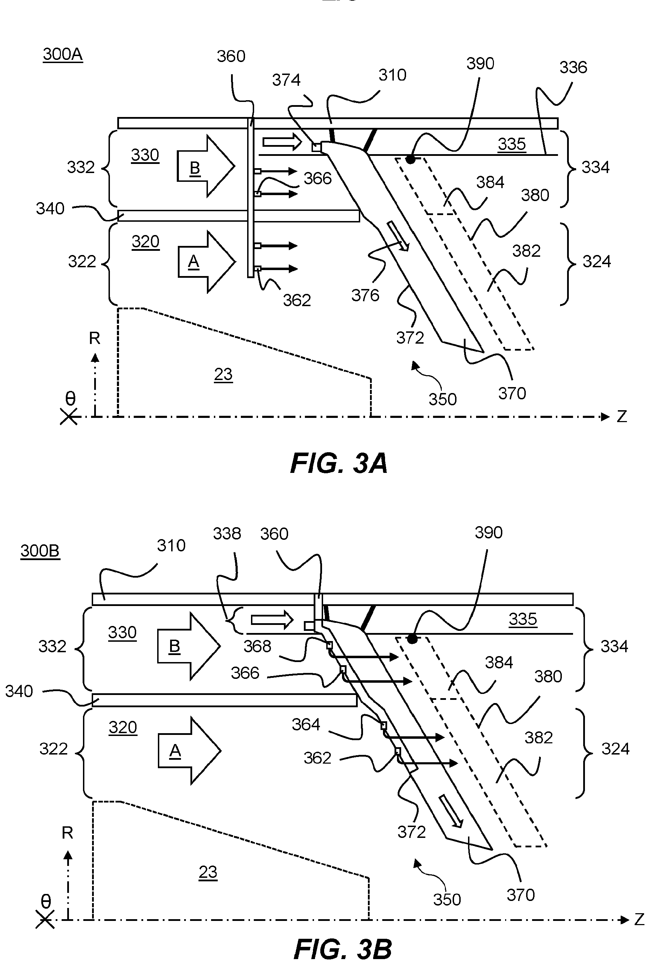

In addition, the reheat assembly 300 may have any suitable combination of features described below with reference to the example reheat assemblies shown in Figures 3A-3B.

Figure 2 shows a schematic view of an aircraft 200 comprising an airframe 201 and a gas turbine engine 10. The gas turbine engine 10 may be in accordance with the gas turbine engine 10 described with reference to Figure 1.

Figure 3A shows a sectional side view of a first example reheat assembly 300A.

The reheat assembly 300A has an axial direction Z, a radial direction R and a circumferential direction θ. Because Figure 3A is a sectional side view of the reheat assembly 300A, the circumferential direction θ is defined through the plane of the page, whereas the axial direction Z and the radial direction R are defined according to the direction of the corresponding coordinate arrows provided by Figure 3A. The reheat assembly 300A is configured such that, when the reheat assembly 300A is incorporated into a gas turbine engine, the axial direction Z of the reheat assembly 300A aligns with a principal and rotational axis of the gas turbine engine. The jetpipe casing 310 defines the axial direction Z, the radial direction R and the circumferential direction θ of the reheat assembly 300A.

As explained with reference to Figures 1 and 4, the reheat assembly 300A comprises a plurality of reheat arrangements 350, with only one is shown in the sectional side view of Figure 3A.

Each reheat arrangement 350 comprises a radially extending flameholder 370. The flameholder 370 is radially extending in that it extends along a direction having a component which is perpendicular to the radial direction R of the reheat assembly 300A. In this example, the flameholder 370 is removably mounted to the jetpipe casing 310 and extends from the jetpipe casing 310 through the reheat bypass section 330 and at least partly into the reheat core section 320. In other examples, the flameholder may be mounted to the support duct, and may therefore not extend through the reheat bypass section. Mounting the flameholder 370 to the jetpipe casing 310 instead of the support duct 340 requires less complex mounting arrangements, and further enables the removal of the flameholder 370 from the reheat assembly without requiring the removal of other components from the reheat assembly, such as the support duct 340, for instance. Accordingly, maintenance of the reheat assembly 300A may be simplified when the flameholder 370 is removably mounted to the jetpipe casing 310.

The flameholder 370 extending through the reheat bypass section 330 also allows the flameholder 370 to be easily configured to promote the formation of the bypass wake-stabilised region 384 within the bypass flow of air B. In turn, this facilitates the ignition and maintenance of a stable flame within the bypass wake-stabilised region 384 in addition to the core wake-stabilised region 382.

The radially extending flameholder 370 is configured to instigate and to maintain a relatively low-speed eddy within the core flow of air A to form a core wake-stabilised region 382 located downstream of the flameholder 370. Since the flameholder 370 in this example is mounted to the jetpipe casing 310, it is also configured to instigate and to maintain a relatively low-speed eddy in the bypass flow of air B within a bypass wake-stabilised region 384 located downstream of the flameholder 370. Consequently, the radially extending flameholder 370 is configured to promote a formation of a wake-stabilised region 380 within the core flow of air A and also within the bypass flow of air B at a location downstream of the flameholder 370.

The reheat arrangement 350 further comprises a plurality of fuel injection ports including a plurality of core fuel injection ports 362 (only two are shown for simplicity) and a plurality of bypass fuel injection ports 366 (only two are shown for simplicity). Each core fuel injection port 362 is configured to discharge a flow of fuel into the reheat core section 320 for mixing with the core flow of air A. Each bypass fuel injection port 366 is configured to discharge a flow of fuel into the reheat bypass section 330 for mixing with the bypass flow of air B.

Each core fuel injection port 362 and bypass fuel injection port 366 is located upstream of the wake-stabilised region 380. In this example, the plurality of fuel injection ports 362, 366 are disposed on a separate fuel injection pipe which is located upstream of the flameholder 370 and is separately mounted to the jetpipe casing 310. Further, in this example, the core fuel injection ports 362 and the bypass fuel injection ports 366 are located in the same circumferential plane defined by the axial direction Z and the radial direction R as the flameholder 370, such that the core fuel injection ports 362 and the bypass fuel injection ports 366 are substantially circumferentially aligned with the flameholder 370.

In some examples, the plurality of fuel injection ports may comprise only a plurality of core fuel injection ports 362, and may not include any bypass fuel injection ports 366. In other examples, there may be only a single core fuel injection port 362 and only a single bypass fuel injection port 366, or only a single core fuel injection port 263 with no bypass fuel injection ports.

In this example, the plurality of fuel injection ports 362, 366 are offset with respect to one another along a radial direction R of the jetpipe casing 310. This ensures that each fuel injection port 362, 366 injects fuel into the jetpipe casing 310 at a different radial location.

The provision of a plurality of core fuel injection ports offset with respect to each other along the radial direction R of the jetpipe casing 310 enables better control of thrust produced by igniting the fuel in the core flow of air A. Similarly, the provision of the plurality of bypass fuel injection ports offset with respect to each other along the radial direction R of the jetpipe casing 310 enables further improved control of thrust produced by igniting the fuel injected into the bypass flow of air B.

In this example, each of the plurality of fuel injection ports 362, 366 is configured to discharge the respective flow of fuel in a direction within the plane perpendicular to the axial direction Z of the jetpipe casing 310. In other examples, the discharge of fuel may not be fully perpendicular to the axial direction, but may be in a direction having a component perpendicular to the axial direction Z of the jetpipe casing 310 (i.e., not parallel to the axial direction Z). Discharging fuel in such a direction improves the mixing of the fuel in the air flow in which it is discharged, by increasing atomisation of the fuel (i.e., creating smaller droplets of fuel) due to the increased difference in relative velocity between the fuel being discharged and the core flow of air A and the bypass flow of air B respectively (i.e., due to the increase in shear stress between the fuel and the air, which shears the fuel into smaller droplets).

In yet further examples, the discharge of fuel may be in a direction parallel to the axial direction Z of the jetpipe casing 310.

The reheat arrangement 350 further comprises a fuel supply system 360 configured to supply the flow of fuel to each of the fuel injection ports 362, 366. The fuel supply system may be configured to independently control a mass flow rate of the respective flow of fuel supplied to each of the plurality of injection ports 362, 366. Such independent control may be achieved with a variable fuel pump and separate control valves for each fuel injection port which are independently controlled. The control valves may be openable to varying degrees to control the discharge amount of fuel from each fuel injection port, and thus the fuel-air ratio of the fuel-air mixture which is formed. In general, a combustion process which occurs below the stoichiometric proportions (i.e., a lean fuel-air ratio) results in an improved fuel efficiency and reduced emissions of the combustion process, whereas a combustion process which occurs above the stoichiometric proportions (i.e., a rich fuel-air ratio) results in an increased thermal power released by the combustion process. In addition, rich fuel-air ratios have a greater propensity to ignite than lean fuel-air ratios.

Therefore, such control of the fuel discharge can be used to vary the amount of additional thrust provided by the reheat assembly 300A and to vary the likelihood of ignition of the fuel. For example, if only limited additional thrust is needed, fuel discharge can be staged by closing the control valves to the bypass fuel injection ports 366, whilst leaving only a single radially innermost core fuel injection port 362 open. If a maximum amount of additional thrust is required, the control valves may be controlled to open fully for all of the fuel injection ports 362, 366. The fuel discharge can also be staged circumferentially in each flameholder 370, for example by discharging fuel from only a single flameholder 370 when limited additional thrust is needed, compared to discharging fuel from all of the flameholders 370 around the circumference.

In this example, the reheat assembly 300A further comprises a hot shot injector 390. The hot shot injector 390 is configured to inject a shot of fuel from the combustion equipment 15 upstream of the reheat assembly 300 which increases in temperature to a point of autoignition at the wake-stabilised region 380 to produce a stable flame therein. In other examples, the fuel may auto-ignite within the wake-stabilised region 380 due to the high temperatures of the air, without the need for a separate hot shot injection.

In use, fuel discharged by the core fuel injection ports 362 is mixed with the core flow of air A prior to entering the core wake-stabilised region 382, and fuel discharged by the bypass fuel injection ports 366 is mixed with the bypass flow of air B prior to entering the bypass wake-stabilised region 384. In use, fuel conveyed by the fuel supply system 360 is generally in a liquid state prior to being discharged by any of the fuel injection ports 362, 366. During mixing with the respective core flow of air A of bypass flow of air B, fuel is at least partially dispersed into fuel droplets. The droplets in the core flow of air A may also be vapourised prior to entering the wake-stabilised region 380 since the core flow of air A is typically at a relatively high temperature. The temperature of the core flow of air A may be in the region of 1100 K, for example. For optimal performance, the fuel droplets injected by the core fuel injection ports 362 into the core flow of air A should be entirely vapourised by the heating provided by the core flow of air A prior to, or on entering the core wake-stabilised region 382. Since the temperature of the bypass flow of air B is typically lower than the core flow of air A, the fuel injected into the bypass flow of air B by the bypass fuel injection ports 366 is less likely to be fully vapourised by the time that it reaches the wake-stabilised region 380. However, the fuel droplets are subject to heating by the flame which is maintained within the wake-stabilised region 380, such that the fuel droplets may fully vaporised by the flame in the wake-stabilised region 380.

As a result, the core flow of air A entrains a mixture of fuel and air (i.e. a fuel-air mixture) upon entry to the core wake-stabilised region 382, and the bypass flow of air B entrains a mixture of fuel and air upon entry to the bypass wake-stabilised region 384.

The fuel within the core flow of air is continually heated by the core flow of air A from the time at which it is discharged into the core flow of air by the at least one core fuel injection port 362 until it is combusted by the flame in the wake-stabilised region 380. Therefore, a temperature of the fuel within the core flow of air A increases from the time at which it is discharged into the core flow of air by the at least one core fuel injection port 362 until it enters the wake-stabilised region 380. In order to prevent autoignition of the fuel within the core flow of air A prior to entry to the wake-stabilised region 380, the temperature of the fuel within the core flow of air A upon entry to the wake-stabilised region 380 should not exceed an autoignition temperature of the fuel. The autoignition temperature of the fuel is a characteristic property of the type of fuel used, as will be appreciated by those skilled in the art.

The temperature of the fuel within the core flow of air A upon entry to the wake-stabilised region 380 is dependent on: a bulk or average temperature of the core flow of air A within the reheat core section 320, a bulk or average velocity of the core flow of air A within the reheat core section 320 and a distance between the at least one core fuel injection port 362 and the wake-stabilised region 380 along the axial direction Z.

As explained above, in this example, the at least one core fuel injection port 362 is separate from the flameholder 370 and is located upstream of the flameholder 370 such that a suitable distance between the fuel injection ports 362, 366 and the radially extending flameholder 370 may be selected to select a suitable distance between the fuel injection ports 362, 366 and the wake-stabilised region 380 along the axial direction Z. The distance between the fuel injection ports 362 and the radially extending flameholder 370 along the axial direction Z may be selected so as to ensure that the fuel within the core flow of air A does not reach the autoignition temperature prior to entering the wake stabilised region 380.

In this example, the flameholder 370 is disposed downstream of the support duct 340. In this examples, the leading edge 372 of the flameholder 370 is in contact with a downstream end of the support duct 340 such that the bypass flow of air B is unable to mix with the core flow of air A upstream of the flameholder 370. This example may be referred to as a "mix-and-burn" type reheat assembly. In other examples, the flameholder 370 may be disposed downstream of the support duct 340 and the leading edge 372 of the flameholder 370 may be axially offset from a downstream end of the support duct 340 such that the bypass flow of air B is able to mix with the core flow of air A upstream of the flameholder 370. Such examples may be referred to as "mix-then-burn" type examples.

In this example, the flameholder 370 comprises a cooling air inlet 374, which is configured to receive a cooling flow of air from the reheat bypass section 330, and a cooling air pathway 376 which is configured to convey the cooling flow of air from the cooling air inlet 374 through the flameholder 370 for heat exchange therebetween. In other examples, there may be no cooling air inlet, or the cooling air inlet may be configured to receive cooling air flow from elsewhere.

In addition, the reheat assembly 300A in this example further comprises a screech damper annulus 335 defined between a screech damper duct 336 and the jetpipe casing 310. The screech damper annulus 335 comprises a screech damper inlet 338 which is disposed radially outward of the radially outermost fuel injection port 366.

The screech damper annulus 335 is generally configured to dampen thermoacoustic excitations (i.e. air pressure fluctuations) which propagate from the reheat assembly 300A as a result of combustion of fuel. For this purpose, the screech damper annulus 335 may comprise a plurality of apertures configured to dampen air pressure fluctuations using viscous effects and/or vortex shedding.

The flameholder 370 in this example is located with respect to the screech damper duct 336 such that the cooling air inlet 374 is located within the screech damper annulus 335 and is therefore configured to receive the cooling flow of air from reheat bypass section 330 via the screech damper inlet 338 and the screech damper annulus 335. Because the screech damper inlet 338 is disposed radially outward of the radially outermost fuel injection port 368, a risk of the cooling flow of air conveyed through the flameholder 370 or through the screech damper annulus 335 being contaminated with fuel is reduced.

In this example, the screech damper inlet 338 is axially aligned with the plurality of fuel injection ports 362, 366. In an example where the fuel injection ports are not disposed in the same axial position, the screech damper inlet may be axially aligned with the most axially upstream fuel injection port. Accordingly, the risk of the cooling flow of air conveyed through the flameholder 370 or screech damper annulus 335 being contaminated with fuel discharged by the or each fuel injection port is further reduced.

**Figure 3B** shows a sectional side view of a second example reheat assembly 300B. The second example reheat assembly is similar to the first example reheat assembly 300A, with like reference numerals indicating common or similar features.

The second example reheat assembly 33B differs from the first example reheat assembly 300A, in that the plurality of fuel injection ports including the plurality of core fuel injection ports 362, and the plurality of bypass fuel injection ports 366 are integrated with the radially extending flameholder 370. In this example, the plurality of fuel injection ports 362, 366 are disposed along a leading edge 372 of the flameholder 370. Accordingly, the fuel supply system 360 is at least partially disposed within the radially extending flameholder 370 so as to provide the flow of fuel to each of the plurality of fuel injection ports 362, 366. Like the first example reheat assembly 300A, some examples may comprise only a plurality of core fuel injection ports, and not include any bypass injection ports. Other examples may comprise only a single core fuel injection port and only a single bypass fuel injection port, or only a single core fuel injection port with no bypass fuel injection ports.

Compared to the example described with reference to Figure 3A, the fuel injection ports 362, 366 being integrated with the flameholder 370 removes the need for a separate fuel injection pipe upstream of the flameholder 370. Removing the separate fuel injection pipe reduces pressure losses incurred due to the obstruction formed by the separate fuel injection pipe within the bypass flow of air B and the core flow of air A. Reducing the pressure losses increases efficiency. Further, the integration of the fuel injection ports 362, 366 into the flameholder 370 reduces a part count and a mass of the reheat arrangement 350.

The flameholder 370 is subjected to intense heating by the flame within the nearby wake-stabilised region 380. In the example of Figure 3B, the fuel injection ports 362, 366 being integrated with the flameholder 370 and/or the fuel supply system 360 being at least partially disposed within the flameholder means that fuel is conveyed through the flameholder 370. Therefore, the flameholder 370 may reject heat into the fuel conveyed through the flameholder 370 to the at fuel injection ports 362, 366 before it is discharged into the core flow of air A.

As a result, the fuel injection ports 362, 366 being integrated with the flameholder 370 and/or the fuel supply system 360 being at least partially disposed within the radially extending flameholder 370 provides additional cooling to the flameholder 370 as well as preheating the fuel which helps to heat it sufficiently for ignition within the wake-stabilised region 380, despite the reduced distance from discharge of the fuel to the wake-stabilised region 380.

The second example reheat assembly 300B differs further from the first example reheat assembly 300A in that the screech damper inlet 338 is disposed upstream of the of the plurality of fuel injection ports 362, 366. Positioning the inlet upstream of all of the fuel injection ports 362, 366 further reduces the risk of a cooling flow of air conveyed through the flameholder 370 or screech damper annulus 335 being contaminated with fuel discharged by the fuel injection ports 362, 366.

In this example, the fuel injection ports 362, 366 being integrated with the flameholder 370 means that the distance between the fuel injection ports 362, 366 and the wake-stabilised region 380 may not be subject to selection compared the example described with reference to Figure 3A. Accordingly, controlling the angle of discharge of fuel from the fuel injection ports 362, 366 such that it is perpendicular to the axial direction Z of the jetpipe casing 310 (or at least not parallel to the axial direction Z) may be especially advantageous in this example.

It will be understood that the invention is not limited to the examples above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined in the appended claims.

## Claims

1. A reheat assembly (300a, 300b) for a gas turbine engine (10), the reheat assembly (300a, 300b) comprising:
a jetpipe casing (310) comprising:
a reheat core section (320) configured to convey a core flow of air from a reheat core inlet (322) to a reheat core outlet (324); and
a reheat bypass section (330) configured to convey a bypass flow of air from a reheat bypass inlet (332) to a reheat bypass outlet (334) radially outward of the core section, wherein the reheat core section (320) and the reheat bypass section (330) are radially separated at the reheat core inlet (322) and the reheat bypass inlet (332) by a support duct (340) within the jetpipe casing (310);
a reheat arrangement (350) comprising a radially extending flameholder (370) and a core fuel injection port (362, 366), wherein:
the flameholder (370) is mounted to the jetpipe casing (310) and extends through the reheat bypass section (330) and at least partly into the reheat core section (320);
the flameholder (370) is configured to promote a formation of a wake-stabilised region (380) within the core flow of air and the bypass flow of air downstream of the flameholder (370); and
the core fuel injection port (362, 366) is:
circumferentially aligned with the flameholder (370) upstream of the wake-stabilised region (380), and
configured to discharge a flow of fuel into the reheat core section (320) for mixing with the core flow of air.

2. The reheat assembly (300a, 300b) according to Claim 1, wherein the flameholder (370) is removably mounted to the jetpipe casing (310).

3. The reheat assembly (300a, 300b) according to Claim 1 or Claim 2, wherein the core fuel injection port (362, 366) is integrated with the flameholder (370).

4. The reheat assembly (300a, 300b) according to Claim 3, wherein the core fuel injection port (362, 366) is disposed along a leading edge (372) of the flameholder (370).

5. The reheat assembly (300a, 300b) according to any one of the preceding claims, wherein the reheat arrangement (350) comprises a plurality of fuel injection ports (362, 366), the plurality of fuel injection ports (362, 366) comprising at least one core fuel injection port (362, 366) and optionally at least one bypass fuel injection port (362, 366), wherein the at least one bypass fuel injection port (362, 366) is configured to discharge a respective flow of fuel into the reheat bypass section (330) for mixing with the bypass flow of air; and
wherein each of the plurality of fuel injection ports (362, 366) are circumferentially aligned with the flameholder (370) upstream of the wake-stabilised region (380) and offset with respect to one another along a radial direction of the jetpipe casing (310).

6. The reheat assembly (300a, 300b) according to Claim 5, further comprising a fuel supply system (360) configured to supply the respective flow of fuel to each of the plurality of fuel injection ports (362, 366), and where the fuel supply system (360) is further configured to independently control a mass flow rate of the respective flow of fuel supplied to each of the plurality of fuel injection ports (362, 366).

7. The reheat assembly (300a, 300b) according to Claim 5 or Claim 6, wherein each of the plurality of fuel injection ports (362, 366) is configured to discharge the respective flow of fuel in a direction having a component perpendicular to an axial direction of the jetpipe casing (310).

8. The reheat assembly (300a, 300b) according to any one of the preceding claims, further comprising a screech damper annulus (335) defined between a screech damper duct (336) and the jetpipe casing (310), the screech damper annulus (335) comprising an inlet axially aligned with or upstream of the fuel injection port (362, 366) or the plurality of fuel injection ports (362, 366);
wherein the flameholder (370) comprises a cooling air inlet (374) within the screech damper annulus (335) to receive a cooling flow of air from the screech damper annulus (335) and a cooling air pathway (376) configured to convey the cooling flow of air from the cooling air inlet (374) through the flameholder (370) for heat exchange therebetween.

9. The reheat assembly (300a, 300b) according to Claim 8, wherein the screech damper duct (336) is disposed within the reheat bypass section (330) such that the screech damper annulus (335) is configured to receive the portion of the bypass flow of air upstream and radially outward of the radially outermost fuel injection port (368).

10. The reheat assembly (300a, 300b) according to any one of the preceding claims, wherein the flameholder (370) is disposed downstream of the support duct (340).

11. The reheat assembly (300a, 300b) according to any one of the preceding claims, comprising a plurality of reheat arrangements (350) offset with respect to one another around a circumferential direction of the jetpipe casing (310).

12. A gas turbine engine (10) comprising:
an engine core (25);
an inner casing (26) which defines a core duct (27)
an outer casing (21) which defines a bypass duct (22); and
a reheat assembly (300a, 300b) according to any preceding claim, wherein the jetpipe casing (310) is attached to the outer casing (21) and the support duct (340) is radially aligned with the inner casing (26) such that:
the reheat core inlet (322) is aligned with an outlet of the core duct (27), and
the reheat bypass inlet (332) is aligned with an outlet of the bypass duct (22); and wherein
the core duct (27) is configured to convey the core flow of air through the engine core (25) to the reheat core inlet (322); and
the bypass duct (22) is configured to convey the bypass flow of air through the gas turbine engine (10) without passing through the engine core (25) to the reheat bypass inlet (332).

13. An aircraft (200) comprising a gas turbine engine (10) in accordance with Claim 12.
